# FASCICULE DE BREVET EUROPEEN

(11) **EP 3 289 329 B1**
(45) Date de publication et mention de la délivrance du brevet: **03.06.2020**
(21) Numéro de dépôt: 16723424.4
(22) Date de dépôt: 20.04.2016
(51) Int. Cl.: G01L 3/14, F02K 9/96

(54) **COUPLEMÈTRE À MESURE DE DÉFORMATION**
DREHMOMENTMESSER ZUR MESSUNG VON VERFORMUNGEN
DEFORMATION MEASURING TORQUE METER

(30) Priorité: 27.04.2015 FR 1553756
(43) Date de publication de la demande: 07.03.2018
(73) Titulaire: Safran Helicopter Engines, 64510 Bordes (FR)
(72) Inventeur: FULLERINGER, Benjamin, 77550 Moissy-Cramayel (FR); BUENO, Armand, 77550 Moissy-Cramayel (FR); CAZAUX, Yannick, 77550 Moissy-Cramayel (FR)
(74) Mandataire: Gevers & Orès
(86) Numéro de dépôt international: PCT/FR2016/050916
(87) Numéro de publication internationale: WO 2016/174330

(56) Documents cités:
- CH-A- 425 272
- US-A- 4 182 168

## Description

### 1. Domaine technique de l'invention

L'invention concerne un couplemètre. En particulier, l'invention concerne un couplemètre pour la mesure d'un couple d'un élément de transmission d'un turbomoteur d'un aéronef.

### 2. Arrière-plan technologique

Les couplemètres sont des dispositifs de mesure de couple qui existent sous plusieurs formes selon le domaine d'application, l'équipement dont le couple doit être mesuré et le degré de précision souhaité. Dans le domaine de l'aéronautique, on utilise fréquemment des couplemètres hydrauliques. Ces couplemètres fonctionnent par exemple grâce à un pignon intermédiaire à denture hélicoïdale, pour lesquels le couple appliqué provoque une poussée axiale proportionnelle au couple à mesurer. Cette poussée axiale est appliquée à un piston lié au pignon intermédiaire. Un autre mode de réalisation fréquemment rencontré est la mesure de la poussée axiale d'une couronne de train épicycloïdal, elle aussi proportionnelle au couple à mesurer. Plus généralement, la mesure sur tout pignon hélicoïdal est possible.

Le mouvement du piston en fonction du couple mesuré provoque une pression sur l'huile dans une chambre de mesure alimentée par un circuit hydraulique jusqu'à équilibrage de la pression exercée par le piston sur l'huile et par l'huile sur le piston. La mesure de la pression à cet équilibre par un capteur de pression permet de déduire le couple mesuré.

Ces couplemètres hydrauliques ont pour inconvénients d'être sensibles aux frottements, dus aux éléments d'étanchéité et aux roulements, et aux fuites, dues au vieillissement des éléments d'étanchéité, la variation de viscosité de l'huile, à la température, etc. Ainsi, la précision des couplemètres hydrauliques n'est pas assurée et leur maintenance est régulièrement nécessaire. De plus, il est impossible de mesurer un couple négatif avec de tels couplemètres.

D'autres couplemètres utilisés sont les couplemètres à torsion, comparant le déphasage de l'arbre soumis au couple avec un arbre en rotation mais non soumis au couple. Néanmoins, la précision de la mesure du couple par les couplemètres à torsion dépend de la longueur de l'arbre, ce qui entraine un encombrement important des couplemètres à torsion pour une mesure précise. De plus, l'arbre en rotation non soumis au couple, qui sert de référence, représente un coût et un poids supplémentaires pour le système.

L'état de la technique comporte notamment les documents CH-A-425 272 et US-A-4 182 168 qui divulguent des dispositifs selon le préambule de la revendication 1.

### 3. Objectifs de l'invention

L'invention vise à pallier au moins certains des inconvénients des couplemètres connus.

En particulier, l'invention vise aussi à fournir, dans au moins un mode de réalisation de l'invention, un couplemètre peu encombrant.

L'invention vise aussi à fournir, dans au moins un mode de réalisation, un couplemètre n'utilisant pas d'éléments hydrauliques nécessitant une gestion de l'étanchéité.

L'invention vise aussi à fournir, dans au moins un mode de réalisation de l'invention, un couplemètre précis.

L'invention vise aussi à fournir, dans au moins un mode de réalisation de l'invention, un couplemètre fiable, nécessitant peu de maintenance.

L'invention vise aussi à fournir, dans au moins un mode de réalisation, un couplemètre adapté pour mesurer un couple négatif.

L'invention vise aussi à fournir, dans au moins un mode de réalisation, un couplemètre peu sensible aux variations de température.

### 4. Exposé de l'invention

Pour ce faire, l'invention concerne un couplemètre comprenant un carter et une pièce montée mobile en translation dans le carter selon une direction longitudinale sous l'effet d'une poussée axiale représentative d'un couple à mesurer, comprenant :
- une surface d'appui reliée au carter par au moins une de ses extrémités, s'étendant au moins en partie dans un plan sensiblement perpendiculaire à la direction longitudinale, une extrémité longitudinale de ladite pièce mobile, dite extrémité de contact, étant adaptée pour être mise en contact avec ladite surface d'appui de façon à ce qu'un déplacement longitudinal de la pièce mobile entraîne une déformation de la surface d'appui,
et caractérisé en ce qu'il comprend :
- des moyens de mesure de la déformation de la surface d'appui, les moyens de mesure de la déformation de la surface d'appui comprenant au moins une jauge de déformation, disposée sur la surface d'appui et adaptée pour mesurer une valeur représentative de la déformation de la surface d'appui.

Un couplemètre selon l'invention permet donc de mesurer le couple d'un élément de transmission d'une chaine de transmission, par exemple un arbre de transmission, sans recourir à un arbre de puissance ou de référence ni à des éléments hydrauliques. Une pièce mobile se déplace en translation en fonction du couple à mesurer, et cette pièce mobile entraine la déformation d'une surface d'appui. La déformation de la surface d'appui est donc représentative du couple, et la mesure de cette déformation permet de déterminer le couple. Le couplemètre occupe ainsi un encombrement faible par rapport à un couplemètre à torsion et un encombrement sensiblement équivalent ou inférieur à un couplemètre hydraulique, sans nécessiter de circuit hydraulique et donc sans nécessiter d'étanchéité associée. L'absence de circuit hydraulique facilite en outre la maintenance.

La surface d'appui est reliée directement ou indirectement au carter par l'une de ses extrémités. Une extrémité de la surface d'appui est par exemple une des arêtes de la surface d'appui. L'extrémité de contact est de préférence en contact avec la surface d'appui de façon à ce que la déformation entrainée par le déplacement de la pièce mobile soit maximisée, de façon à améliorer la précision de la mesure de déformation.

Avantageusement, la déformation de la surface d'appui est une déformation élastique. Le maintien des déformations de la surface d'appui dans un domaine élastique permet d'obtenir un même couple mesuré pour une même déformation mesurée.

Avantageusement et selon l'invention, les moyens de mesure de la déformation de la surface d'appui comprennent un capteur de proximité, relié au carter, orienté vers la surface d'appui, et configuré pour mesurer le déplacement de la surface d'appui dans la direction longitudinale.

On entend par déplacement de la surface d'appui une modification de la position d'au moins une portion de la surface d'appui.

Selon cet aspect de l'invention, le déplacement de la surface d'appui dans la direction longitudinale est du à la flexion de la surface d'appui dans la direction longitudinale du fait du déplacement de la pièce mobile. Ce déplacement est donc représentatif du couple à mesurer. Le capteur de proximité, mesurant la distance entre lui-même et la surface d'appui, permet donc de mesurer ce déplacement correspondant à une variation de cette distance.

Avantageusement et selon ce dernier aspect de l'invention, le capteur de proximité peut-être un capteur de proximité inductif.

Selon cet aspect de l'invention, un capteur de proximité inductif permet de mesurer le déplacement dans de bonnes conditions en réduisant les risques de perturbations de mesures du fait de la nature du milieu entre le capteur de proximité et la surface d'appui. Notamment, la mesure n'est pas perturbée en cas de présence de gaz, de particules, d'huile, etc. entre le capteur de proximité et la surface d'appui, cette présence étant possible dans le cadre de l'utilisation du couplemètre dans un turbomoteur. Le capteur de proximité inductif détecte la distance avec un objet métallique, la surface d'appui doit donc, dans ce mode de réalisation, être formée en métal ou comporter au moins une partie métallique vers laquelle est orienté le capteur de proximité.

Avantageusement, le capteur de proximité est un capteur inductif à courants de Foucault.

Les capteurs de proximité inductif, notamment le capteur à courants de Foucault, ont une bonne précision et une bonne fiabilité, permettant ainsi d'obtenir une valeur précise et fiable du couple à mesurer.

Avantageusement et selon l'invention, l'extrémité de contact et la surface d'appui sont reliées solidairement par une fixation.

Selon cet aspect de l'invention, la fixation permet de rendre solidaire la surface d'appui et la pièce mobile, permettant ainsi la mesure de couple négatif, quelque soit les moyens de mesure utilisés.

Avantageusement, lorsque le capteur de proximité est un capteur inductif, la fixation est métallique et est orientée vers le capteur de proximité. Le capteur de proximité mesure ainsi la distance entre lui-même et la fixation métallique, pour en déduire la déformation de la surface d'appui.

La déformation de la surface d'appui étant représentative du couple à mesurer, une mesure de cette déformation permet de déterminer le couple. Pour améliorer la précision et la stabilité (notamment en température) de la mesure, la ou les jauges de déformations peuvent être reliées à un pont de Wheatstone.

Avantageusement, la déformation mesurée par la ou les jauges de déformations est une déformation due à une extension ou une compression de la surface d'appui, du fait d'une force exercée par l'extrémité de contact de la pièce mobile sur la surface d'appui.

Avantageusement et selon l'invention, la surface d'appui est reliée au carter par l'intermédiaire d'un support formé dans un matériau ne se déformant pas selon les variations de températures.

Selon cet aspect de l'invention, le support permet de minimiser l'influence de la température sur la mesure de la déformation de la surface d'appui, notamment lorsque cette mesure est obtenue à l'aide de capteur de proximité. L'utilisation d'un support distinct du carter permet en outre une maintenance facilitée, le support pouvant être remplacé, évitant ainsi de remplacer l'intégralité du carter. Un tel matériau ne se déformant pas selon les variations de températures est par exemple l'Invar.

Avantageusement et selon l'invention, la surface d'appui est formée dans un matériau dont le module d'Young est peu sensible aux variations de la température.

Selon cet aspect de l'invention, la déformation de la surface d'appui mesurée par les moyens de mesure de la déformation ne dépend pas de la température de la surface d'appui. Un tel matériau dont le module d'Young est peu sensible aux variations de la température est par exemple l'Élinvar. Le module d'Young varie ainsi au maximum de ±1%, selon la composition du matériau utilisé, dans l'intervalle de température auquel est soumis le couplemètre.

De préférence, la surface d'appui est formée dans un matériau dont le module d'Young ne varie pas en fonction de la température, dans l'intervalle de température auquel est soumis le couplemètre.

Dans le cadre de l'utilisation du couplemètre dans un turbomoteur, les variations de températures dans le couplemètre peuvent être importantes. La mesure du couple doit donc prendre en compte ces variations de températures, ici en réduisant les effets de ces variations.

Avantageusement, un couplemètre selon l'invention comprend des moyens de mesure de la température.

Selon cet aspect de l'invention, la mesure de température par les moyens de mesure de la température permet de détecter les éventuelles variations de températures qui peuvent entrainer des variations de mesure du couple. La valeur du couple est alors ajustée en tenant compte de la valeur de température mesurée.

Dans le cadre de l'utilisation du couplemètre dans un turbomoteur, les variations de températures dans le couplemètre peuvent être importantes. La mesure du couple doit donc prendre en compte ces variations de températures, ici en compensant les effets de ces variations.

L'invention concerne également un turbomoteur comprenant un élément de transmission, caractérisé en ce qu'il comprend un couplemètre selon l'invention relié mécaniquement à l'élément de transmission de manière à pouvoir mesurer le couple appliqué à l'élément de transmission.

L'élément de transmission peut être par exemple un arbre, un pignon à denture interne ou externe hélicoïdale, etc. Le couple mesuré est ainsi le couple transitant dans la transmission dont fait partie l'élément de transmission.

L'invention concerne également un couplemètre et un turbomoteur caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'un couplemètre,
- la figure 2 est une vue schématique en coupe d'un couplemètre selon un deuxième mode de réalisation,
- la figure 3a est une vue schématique en coupe d'une partie d'un couplemètre mesurant un couple C, à une température de 0°C,
- la figure 3b est une vue schématique en coupe d'une partie d'un couplemètre mesurant un couple C, à une température de 150°C et comprenant une surface d'appui sensible à la température et un carter insensible aux variations de températures,
- la figure 3c est une vue schématique en coupe d'une partie d'un couplemètre mesurant un couple C, à une température de 150°C et comprenant un carter et une surface d'appui sensibles aux variations de températures,
- la figure 4 est une vue schématique en coupe d'un couplemètre,

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

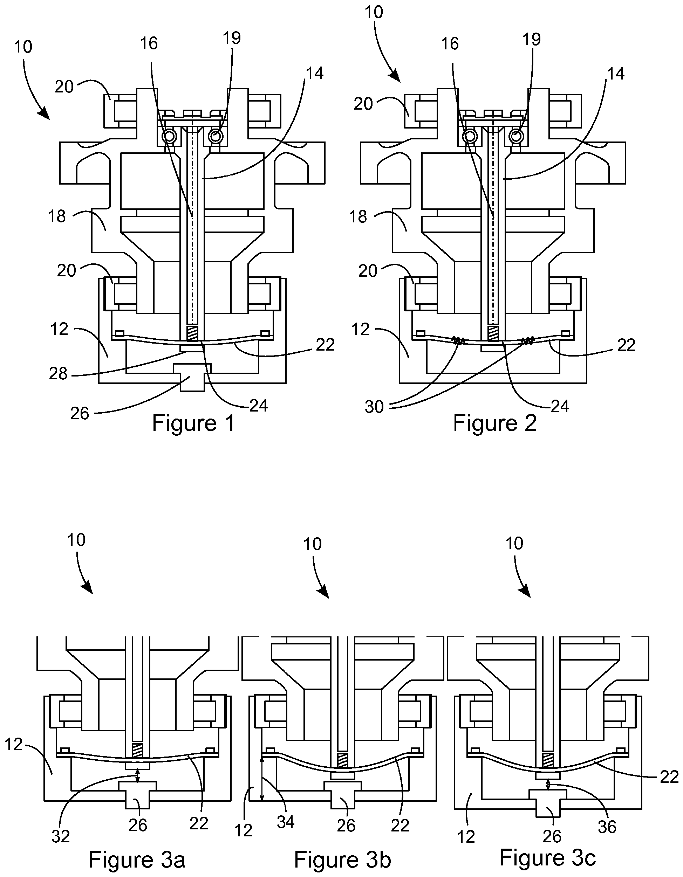

Les figures 1 et 2 représentent schématiquement en coupe un couplemètre 10 selon un premier et un deuxième mode de réalisation de l'invention. Le couplemètre 10 comprend un carter 12, dans lequel peut se déplacer une pièce 14 mobile en translation. Le déplacement en translation de la pièce 14 mobile s'effectue selon une direction longitudinale, ici parallèle avec un axe 16 de la pièce mobile. Sur les vues des figures 1 à 4, la pièce 14 mobile se déplace ainsi de haut en bas ou de bas en haut. Le couplemètre 10 est avantageusement utilisé pour mesurer le couple d'un arbre en rotation dans un turbomoteur d'un aéronef.

La pièce 14 mobile est reliée à un pignon 18, doté d'une ou plusieurs dentures hélicoïdales, par le biais de roulements 19. Le couple appliqué au pignon 18 transmet une poussée à la pièce 14 mobile, entrainant ainsi son déplacement. Le déplacement en translation de la pièce 14 mobile est donc représentatif du couple à mesurer. Le pignon 18 est relié au carter 12 via des roulements 20, les roulements 19 et les roulements 20 permettant le déplacement de la pièce 14 mobile et du pignon 18 dans la direction longitudinale, ainsi que la rotation autour de l'axe 16 de la pièce 14 mobile.

Le couplemètre comprend une surface 22 d'appui, reliée au carter 12 par au moins une de ses extrémités et s'étendant selon un plan sensiblement perpendiculaire à la direction longitudinale. Par exemple, la surface 22 d'appui peut être une plaque allongée, dont la longueur est supérieure aux autres dimensions (donc assimilable à une poutre), dont les deux extrémités sont reliées au carter. La surface 22 d'appui peut aussi être une membrane, notamment circulaire, dont tous les points à sa périphérie sont considérés comme extrémités et sont reliés au carter 12.

La surface 22 d'appui est en contact avec une extrémité de la pièce 14 mobile, dite extrémité 24 de contact. Le déplacement de la pièce 14 mobile provoque donc une déformation de la surface 22 d'appui. Notamment, la surface 22 d'appui étant reliée à une de ses extrémités au carter 12 et s'étendant sensiblement perpendiculairement à la direction longitudinale, la déformation de la surface 22 d'appui se manifeste notamment par un déplacement de la surface 22 d'appui et une extension ou compression de la surface 22 d'appui. La déformation s'apparente à une flexion de la surface 22 d'appui, les extrémités de la surface 22 d'appui restant fixes par rapport au carter 12 et la partie de la surface 22 d'appui en contact avec l'extrémité 24 de contact subissant la force exercée par la pièce 14 mobile du fait de son déplacement, cette force étant sensiblement perpendiculaire au plan dans lequel s'étend la surface 22 d'appui.

Afin de mesurer cette déformation de la surface 22 d'appui et ainsi de déterminer le couple à mesurer, le couplemètre 10 comprend des moyens de mesures de la déformation de la surface 22 d'appui.

Selon un premier mode de réalisation d'un couplemètre représenté figure 1, les moyens de mesures de la déformation de la surface 22 d'appui comprennent un capteur 26 de proximité, autrement appelé proximètre permettant la mesure de la distance entre lui-même et la surface 22 d'appui. En fonction du couple à mesurer, cette distance varie du fait du déplacement de la surface 22 d'appui dans la direction longitudinale. La comparaison de la distance mesurée lors de l'application d'un couple avec la distance mesurée lorsqu'aucun couple n'est appliqué permet de déterminer le déplacement de la surface 22 d'appui. Le couplemètre 10 peut en outre comprendre une fixation 28 pour relier solidairement la pièce 14 mobile à la surface 22 d'appui. Dans ce cas, le capteur 26 de proximité peut mesurer la distance entre lui-même et la fixation 28 plutôt que la surface 22 d'appui, ce qui ne modifie pas la mesure du couple, basée sur la différence entre les distances mesurées avec ou sans couple.

Le capteur 26 de proximité est avantageusement un capteur de proximité de type inductif, car ce type de capteur est peu perturbé par le milieu entre la surface 22 d'appui et le capteur 26 de proximité. Notamment, en cas d'utilisation du couplemètre 10 dans un turbomoteur, le milieu peut comprendre des gaz chauds et de l'huile. Un capteur de proximité inductif mesure la distance entre lui-même et un élément métallique : en conséquence, soit la surface 22 d'appui ou la portion de la surface 22 d'appui vers laquelle est orienté le capteur 26 de proximité doit être métallique, soit, si le couplemètre 10 comprend une fixation 28 de la surface 22 d'appui à la pièce 14 mobile, cette fixation 28 peut être métallique et le capteur 26 de proximité est alors orienté vers la fixation 28.

En pratique, par exemple pour un couplemètre utilisé dans un turbomoteur, la distance entre le capteur 26 de proximité et la surface 22 d'appui (ou la fixation 28) est inférieure à 10mm. La différence de déplacement de la surface 22 d'appui entre le couple minimal à mesurer et le couple maximal à mesurer est de l'ordre de 0,3mm. Les capteurs de proximité couramment utilisés peuvent mesurer sur un intervalle de 1mm avec une sensibilité de l'ordre de 0,1µm.

Selon un deuxième mode de réalisation d'un couplemètre, selon l'invention et représenté figure 2, les moyens de mesures de la déformation de la surface 22 d'appui comprennent au moins une jauge 30 de déformation, ici deux par exemple, permettant la mesure de la déformation de la surface 22 d'appui, notamment la déformation due à l'extension ou la compression de la surface 22 d'appui provoquée par le déplacement de la pièce 14 mobile.

Une jauge de déformation, autrement appelée jauge de contrainte, est généralement constituée d'une pièce conductrice dont la résistance électrique varie en fonction de la déformation de la pièce. La pièce est constituée d'une longue piste électrique repliée formant une grille ou une spire. La variation de la résistance électrique de la pièce conductrice est représentative de la déformation de la jauge de déformation.

Le capteur 26 de proximité du premier mode de réalisation et la ou les jauges 30 de déformation du deuxième mode de réalisation peuvent être utilisés seuls ou combinés pour permettre par exemple une corrélation des résultats des mesures de déformation et ainsi améliorer la mesure du couple.

La mesure de la déformation de la surface 22 d'appui est sensible aux variations de températures du couplemètre 10. Notamment, la surface 22 d'appui et le carter 12 sont susceptibles de se déformer en cas de variation de la température, cette déformation s'ajoutant ainsi aux déformations entrainées par la pièce 14 mobile. En outre, les variations de températures peuvent aussi modifier les mesures obtenues par les moyens de mesures de la déformation. Pour pallier à ces problèmes, plusieurs options sont possibles. Ces options peuvent notamment être combinées.

Une option par exemple, qui s'applique à tous les modes de réalisation, est d'ajouter au couplemètre 10 un moyen de mesure de la température. La température est ainsi connue, et les mesures de déformation effectuées peuvent être corrigées en fonction de la température mesurée.

Concernant le deuxième mode de réalisation représenté figure 2, afin de réduire les effets des variations de température sur les jauges 30 de déformations, celles-ci sont connectées de telle façon qu'elles forment un pont de Wheatstone (non représenté).

Les figures 3a, 3b, et 3c représentent schématiquement en coupe une partie d'un couplemètre 10 mesurant un couple C, selon plusieurs conditions de températures. Le couplemètre 10 reprend ici les éléments du premier mode de réalisation d'un couplemètre.

La figure 3a représente le couplemètre 10 mesurant un couple C, et soumis à une température de 0°C. La pièce 14 mobile exerce une force sur la surface 22 d'appui, entrainant une déformation de la surface 22 d'appui. Un capteur 26 de proximité mesure cette déformation en déterminant la distance, représentée par la double flèche 32, entre lui-même et la surface d'appui, ou ici la fixation.

La figure 3b représente le couplemètre 10 mesurant un même couple C, et soumis à une température de 150°C. Le carter 12 utilisé sur ce couplemètre n'est pas sensible aux variations de températures, par exemple la distance représentée par la double flèche 34 n'a pas changé par rapport au couplemètre 10 de la figure 3a. Un matériau ne subissant pas de déformation lorsque la température varie est par exemple de l'Invar, un alliage de fer et de nickel (généralement 64% de fer et 36% de nickel). La surface 22 d'appui est sensible aux variations de températures, ainsi la surface 22 d'appui se déforme différemment par rapport au couplemètre 10 représenté sur la figure 3a, soumis à une température de 0°C. La différence de déformation est notamment due à une variation de la rigidité de la surface 22 d'appui en fonction de la température. Ici, la distance entre le capteur 26 de proximité et la surface 22 d'appui (ou la fixation 28) est réduite, pour un même couple C. Ainsi, la mesure du couple doit tenir compte de la variation de la rigidité de la surface 22 d'appui, par exemple par une mesure de la température pour compenser cette variation.

Il est aussi possible d'utiliser un carter 12 sensible aux variations de températures, comme représenté sur la figure 3c. En outre, le carter 12 est aussi dimensionné pour que les variations de températures soient calculées de sorte qu'à un couple défini, la distance mesurée par le capteur 26 de proximité soit la même quelle que soit la température : la dilatation du carter 12 en cas d'augmentation de température augmente la distance entre le capteur 26 de proximité et la surface 22 d'appui (ou la fixation) de sorte à compenser la différence de déformation de la surface 22 d'appui du fait de l'augmentation de la température. Comme visible figure 3c, la distance représentée par la double flèche 36 est la même que la distance 32 sur la figure 3a, pour un même couple C mesuré par le couplemètre, ceci dans le but de réduire l'erreur de mesure à tout autre couple différent de C.

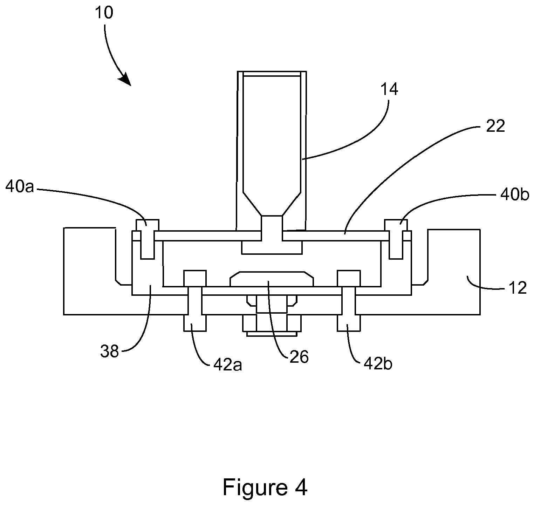

La figure 4 représente schématiquement en coupe un troisième mode de réalisation d'un couplemètre 10, dans lequel le couplemètre 10 comprend un support 38 reliant la surface 22 d'appui au carter 12. En particulier, la surface 22 d'appui est reliée au support 38 par des moyens 40a, 40b de fixations, et le support 38 est lui-même relié au carter 12 par des moyens 42a, 42b de fixation. Le capteur 26 de proximité est disposé sur ce support 38. Seule la partie inférieure du couplemètre 10 est représentée.

Pour permettre une sensibilité moindre du couplemètre aux variations de température, le support 38 est formé d'un matériau ne se déformant pas en cas de variation de la température, par exemple en Invar, et la surface 22 d'appui est formée d'un matériau dont le module d'Young varie peu en cas de variation de la température, par exemple en Élinvar, un alliage d'acier au nickel (généralement 36% de nickel, 12% de chrome). Ainsi, les déformations de la surface 22 d'appui mesurée grâce aux moyens de mesure de la déformation due au déplacement de la pièce 14 mobile sont stables quand la température à laquelle le couplemètre 10 est soumis varie.

## Revendications

1. Couplemètre comprenant un carter (12) et une pièce (14) montée mobile en translation dans le carter selon une direction longitudinale sous l'effet d'une poussée axiale représentative d'un couple à mesurer, comprenant :
- une surface (22) d'appui reliée au carter (12) par au moins une de ses extrémités, s'étendant au moins en partie dans un plan sensiblement perpendiculaire à la direction longitudinale, une extrémité longitudinale de ladite pièce (14) mobile, dite extrémité (24) de contact, étant adaptée pour être mise en contact avec ladite surface (22) d'appui de façon à ce qu'un déplacement longitudinal de la pièce (14) mobile entraîne une déformation de la surface (22) d'appui,
et **caractérisé en ce qu'**il comprend :
- des moyens (26, 30) de mesure de la déformation de la surface (22) d'appui, les moyens de mesure de la déformation de la surface (22) d'appui comprenant au moins une jauge (30) de déformation, disposée sur la surface (22) d'appui et adaptée pour mesurer une valeur représentative de la déformation de la surface (22) d'appui.

2. Couplemètre selon la revendication 1, **caractérisé en ce que** les moyens de mesure de la déformation de la surface (22) d'appui comprennent un capteur (26) de proximité, relié au carter (12), orienté vers la surface (22) d'appui, et configuré pour mesurer le déplacement de la surface (22) d'appui dans la direction longitudinale.

3. Couplemètre selon la revendication 2, **caractérisé en ce que** le capteur (26) de proximité est un capteur de proximité inductif.

4. Couplemètre selon la revendication 1 à 3, **caractérisé en ce que** l'extrémité (24) de contact et la surface (22) d'appui sont reliées solidairement par une fixation (28).

5. Couplemètre selon la revendication 4, **caractérisé en ce que** la fixation (28) est métallique.

6. Couplemètre selon l'une des revendications 1 à 5, **caractérisé en ce que** la surface (22) d'appui est reliée au carter (12) par l'intermédiaire d'un support (38) formé dans un matériau ne se déformant pas selon les variations de températures.

7. Couplemètre selon l'une des revendications 1 à 6, **caractérisé en ce que** la surface (22) d'appui est formée dans un matériau dont le module d'Young ne varie pas en fonction de la température.

8. Couplemètre selon l'une des revendications 1 à 7, **caractérisé en ce qu'**il comprend des moyens de mesure de la température.

9. Turbomoteur comprenant un élément de transmission, **caractérisé en ce qu'**il comprend un couplemètre (10) selon l'une des revendications 1 à 8 relié mécaniquement à l'élément de transmission de manière à pouvoir mesurer le couple appliqué à l'élément de transmission.

## Patentansprüche

1. Drehmomentmesser, umfassend ein Gehäuse (12) und ein Teil (14), das in einer Längsrichtung unter der Wirkung eines axialen Schubs, der repräsentativ für ein zu messendes Drehmoment ist, translationsbeweglich in dem Gehäuse montiert ist, Folgendes umfassend:
- eine Auflageoberfläche (22), die durch mindestens eines ihrer Enden mit dem Gehäuse (12) verbunden ist, die sich mindestens teilweise über eine zur Längsrichtung im Wesentlichen senkrechte Ebene erstreckt, wobei ein Längsende des beweglichen Teils (14), Kontaktende (24) genannt, angepasst ist, um mit der Auflageoberfläche (22) derart in Kontakt gebracht zu werden, dass eine Längsverschiebung des beweglichen Teils (14) für eine Verformung der Auflageoberfläche (22) sorgt,
und **dadurch gekennzeichnet, dass** er Folgendes umfasst:
- Mittel (26, 30) zum Messen der Verformung der Auflageoberfläche (22), wobei die Mittel zum Messen der Verformung der Auflageoberfläche (22) mindestens einen Verformungsmessstreifen (30) umfassen, der an der Auflageoberfläche (22) angeordnet ist, und angepasst ist, um einen für die Verformung der Auflageoberfläche (22) repräsentativen Wert zu messen.

2. Drehmomentmesser nach Anspruch 1, **dadurch gekennzeichnet, dass** die Mittel zum Messen der Verformung der Auflageoberfläche (22) einen Näherungssensor (26) umfassen, der mit dem Gehäuse (12) verbunden ist, zu der Auflageoberfläche (22) ausgerichtet ist, und konfiguriert ist, um die Verschiebung der Auflageoberfläche (22) in der Längsrichtung zu messen.

3. Drehmomentmesser nach Anspruch 2, **dadurch gekennzeichnet, dass** der Näherungssensor (26) ein induktiver Näherungssensor ist.

4. Drehmomentmesser nach Anspruch 1 bis 3, **dadurch gekennzeichnet, dass** das Kontaktende (24) und die Auflageoberfläche (22) durch eine Befestigung (28) fest miteinander verbunden sind.

5. Drehmomentmesser nach Anspruch 4, **dadurch gekennzeichnet, dass** die Befestigung (28) aus Metall ist.

6. Drehmomentmesser nach einem der Ansprüche 1 bis 5, **dadurch gekennzeichnet, dass** die Auflageoberfläche (22) anhand eines Trägers (38) mit dem Gehäuse (12) verbunden ist, der aus einem Material gebildet ist, das sich je nach den Temperaturvariationen nicht verformt.

7. Drehmomentmesser nach einem der Ansprüche 1 bis 6, **dadurch gekennzeichnet, dass** die Auflageoberfläche (22) aus einem Material gebildet ist, dessen Young'sches Modul in Abhängigkeit von der Temperatur nicht variiert.

8. Drehmomentmesser nach einem der Ansprüche 1 bis 7, **dadurch gekennzeichnet, dass** er Mittel zum Messen der Temperatur umfasst.

9. Turbomotor, umfassend ein Übertragungselement, **dadurch gekennzeichnet, dass** er einen Drehmomentmesser (10) nach einem der Ansprüche 1 bis 8 umfasst, der mechanisch mit dem Übertragungselement verbunden ist, um das Drehmoment messen zu können, das an dem Übertragungselement anliegt.

## Claims

1. Torque meter comprising a casing (12) and a part (14) mounted such that it can move in translation in the casing in a longitudinal direction under the effect of an axial thrust representative of a torque to be measured, comprising:
- a bearing surface (22) connected to the casing (12) via at least one of the ends thereof, extending at least partially in a plane that is substantially perpendicular to the longitudinal direction, one longitudinal end of said movable part (14), called a contact end (24), being suitable for being brought into contact with said bearing surface (22) so that a longitudinal displacement of the movable part (14) leads to a deformation of the bearing surface (22),
and **characterised in that** it comprises:
- means (26, 30) for measuring the deformation of the bearing surface (22), the means for measuring the deformation of the bearing surface (22) comprising at least one strain gauge (30), positioned on the bearing surface (22) and suitable for measuring a value representative of the deformation of the bearing surface (22).

2. Torque meter according to claim 1, **characterised in that** the means for measuring the deformation of the bearing surface (22) comprise a proximity sensor (26), connected to the casing (12), oriented towards the bearing surface (22), and configured so as to measure the displacement of the bearing surface (22) in the longitudinal direction.

3. Torque meter according to claim 2, **characterised in that** the proximity sensor (26) is an inductive proximity sensor.

4. Torque meter according to claims 1 to 3, **characterised in that** the contact end (24) and the bearing surface (22) are fixedly connected to each other by a fastener (28).

5. Torque meter according to claim 4, **characterised in that** the fastener (28) is made from metal.

6. Torque meter according to any of claims 1 to 5, **characterised in that** the bearing surface (22) is connected to the casing (12) via a support (38) made from a material that does not become deformed as a result of the temperature variations.

7. Torque meter according to any of claims 1 to 6, **characterised in that** the bearing surface (22) is made from a material, the Young's modulus of which does not vary as a function of the temperature.

8. Torque meter according to any of claims 1 to 7, **characterised in that** it comprises temperature-measuring means.

9. Turboshaft engine comprising a transmission element, **characterised in that** it comprises a torque meter (10) according to any of claims 1 to 8, mechanically connected to the transmission element so as to be able to measure the torque applied to the transmission element.
